# FASCICULE DE BREVET EUROPEEN

(11) **EP 3 585 528 B1**
(45) Date de publication et mention de la délivrance du brevet: **03.01.2024**
(21) Numéro de dépôt: 18706279.9
(22) Date de dépôt: 26.02.2018
(51) Int. Cl.: B08B 15/02, E04H 1/12, B64F 1/00

(54) **DISPOSITIF ET PROCÉDÉ DE DÉCONTAMINATION POUR MATÉRIEL MILITAIRE**
VORRICHTUNG UND VERFAHREN ZUR DEKONTAMINATION VON MILITÄRISCHEN AUSRÜSTUNGEN
DEVICE AND METHOD FOR DECONTAMINATION OF MILITARY EQUIPMENT

(30) Priorité: 24.02.2017 FR 1751494
(43) Date de publication de la demande: 01.01.2020
(73) Titulaire: Utilis S.A., 57365 Ennery (FR)
(72) Inventeur: PREVOST, Philippe, 57000 Metz (FR); KIEFFER, Thibaut, 57175 Gandrange (FR)
(74) Mandataire: Radzimski, Eric
(86) Numéro de dépôt international: PCT/EP2018/054660
(87) Numéro de publication internationale: WO 2018/154105

(56) Documents cités:
- EP-A1- 0 494 053
- WO-A1-2007/102798
- FR-A1- 2 630 385
- FR-A1- 2 759 973
- US-A1- 2017 036 779

## Description

### DOMAINE DE L'INVENTION

L'invention se rapporte à un dispositif et un procédé de décontamination pour décontaminant nucléaire, biologique et/ou chimique, pour décontaminer du matériel notamment militaire. L'invention est particulièrement adaptée à la décontamination d'un aéronef tel qu'un hélicoptère militaire.

### ART ANTERIEUR

Une installation de décontamination consiste en un tunnel étanche, compartimenté ou non, permettant dans cette installation tous travaux dans la zone de travail sans emmener les décontaminants à l'extérieur. Une telle installation peut être remorquée et entièrement autonome avec ses propres sources d'électricité, d'eau et d'air comprimé.

Il existe dans l'art antérieur des tunnels ou des pré-tunnels de décontamination, notamment dans le domaine du nucléaire et de la pollution chimique et biologique. En particulier, le brevet EP1522454 décrit un système de décontamination mobile pour la décontamination de personnes et d'articles. Ce système est composé de plusieurs modules de décontamination, qui comportent chacun des dispositifs pour la décontamination de personnes et/ou d'articles. Les dispositifs du premier module de décontamination sont disposés sur un premier container transportable et les dispositifs du deuxième module de décontamination sont disposés sur un deuxième container transportable.

Le brevet FR2840272 divulgue un procédé de décontamination de véhicules avec faible ruissellement, mis en oeuvre sur une station de décontamination chimique et/ou bactériologique comportant au moins un couloir de traitement suffisamment large pour le passage desdits véhicules, caractérisé en ce qu'il comporte une étape préalable de placement du véhicule dans ledit couloir, une étape ultérieure de sortie dudit véhicule de ce couloir, une étape de décontamination chimique ou biologique dudit véhicule, s'effectuant dans ledit couloir par l'intermédiaire d'une pluralité de rampes d'aspersion mobiles pulvérisant une quantité réduite d'un fluide décontaminant et une étape de récupération des écoulements dudit fluide dans le couloir de traitement. Ce procédé n'est pas du tout adapté aux aéronefs et véhicule non terrestres ni même au matériel militaire.

On connaît également la technologie de désinfection des surfaces par voie aérienne, par diffusion de biocide liquide dans l'air.

En particulier, le brevet EP2131873 propose un procédé de désinfection par voie aérienne par génération de microgouttelette à température ambiante et diffusion de biocide dans un gaz porteur circulant dans au moins une enceinte, avec un abaissement de la température du gaz circulant dans l'enceinte puis réchauffement du gaz circulant dans l'enceinte jusqu'à une température de transport d'au moins 35 degrés. Celsius, génération de micro gouttelettes de biocide, et injection de ces micro gouttelettes dans le gaz porteur circulant dans l'enceinte à la température de transport, le biocide liquide est choisi parmi un composé à base de peroxyde d'hydrogène (H2O2), de l'acide péracétique, ou un mélange de peroxyde d'hydrogène et d'acide péracétique, comprenant de préférence entre 2% et 5% d'acide péracétique.

La nébulisation permet de diffuser un brouillard composé de microgouttelettes d'eau filtrées, sans ajout de produits chimiques. Ce brouillard très fin, hydrate et met en valeur les produits frais dans le domaine de l'alimentaire tant du point de vue de leur fraîcheur que de leur apparence, le tout dans le respect de l'environnement.

Pour les nébuliseurs ultrasoniques, la transformation est faite grâce à une surface vibrante actionnée par les ultrasons (fréquence supérieure à vingt kilohertz).

Pour les nébuliseurs concentriques, la nébulisation est générée par l'introduction simultanée du liquide et d'un gaz. Les liquides peuvent être de l'eau, des acides, du carburant, des solvants, et certaines peintures.

Il existe sur le marché de la santé et du bien-être des diffuseurs par nébulisation qui diffusent les huiles essentielles par l'effet Venturi. On parle de nébuliseurs Venturi. Ces vibrations, sans danger pour l'homme ni les animaux, séparent les molécules les unes des autres et projettent dans l'air ambiant des particules très fines d'huiles essentielles par l'intermédiaire d'un bec. Ces diffuseurs peuvent couvrir une zone allant jusqu'à 120 m².

La technologie de nébulisation est également majoritairement utilisée dans les systèmes de refroidissement et de climatisation des voitures, ce système à froid utilise un système par ultrason qui est plongé dans le liquide contenu dans le réservoir permettant sa décontamination.

En particulier, le brevet FR3030020 décrit un dispositif de rafraîchissement et d'humidification de l'air d'une enceinte, le dispositif comprenant une tête de nébulisation pour expulser un liquide de nébulisation et une chambre de décontamination alimentée en liquide de nébulisation, caractérisé en ce que la chambre de décontamination est délimitée par une paroi qui est au moins partiellement en contact avec la tête de nébulisation, de manière à ne laisser subsister aucun espace de stagnation du liquide entre la chambre de décontamination et la tête de nébulisation. Tous ces dispositifs fonctionnent à froid et rafraichissent l'air ambiant. La demande de brevet WO 2007/102798 divulgue un système de décontamination selon le préambule de la revendication 1 destiné à décontaminer un article et comprenant une structure gonflable dans laquelle on injecte de l'air dans ses parois.

La demande de brevet US20050074359 divulgue un système intégré pour la décontamination d'un avion, de ses passagers et des objets transportés par celui-ci dans le cas d'une contamination par un agent biologique pathogène ou un agent chimique, comprenant plusieurs véhicules de décontamination mobiles. Un premier système pulvérise une solution de décontamination chimique sur l'extérieur de l'avion. Un deuxième système réalise une décontamination des passagers avec une solution de décontamination humaine, l'assemblage des système permettant d'éviter l'échappement desdits agents pathogènes dans le milieu environnant. Enfin, un troisième véhicule utilise, pour la décontamination et l'élimination des contaminants intérieurs dans l'avion, un décontaminant gazeux tel que le peroxyde d'hydrogène délivré par un générateur portable. Ce système utilise des véhicules distincts pour une décontamination complète et n'isole pas l'appareil pour une décontamination étanche.

### PROBLEME TECHNIQUE

Il n'existe donc pas de système rapide, simple et efficace permettant la décontamination par tous les types de décontaminants, à savoir nucléaire, biologique et chimique, des aéronefs et hélicoptère militaire.

En effet, les systèmes et procédés présentés ci-dessus sont très difficiles à appliquer et mettre en oeuvre dans des conditions difficiles, notamment dans des conditions de guerre. En particulier, notamment en raison de leur taille, les tunnels de l'art antérieur ne sont pas adaptés au grand matériel, notamment les avions et hélicoptère.

En outre, la nébulisation à froid n'est pas adaptée aux situations extrêmes et aux décontaminations chimiques. En effet, l'obligation d'abaisser la température n'est pas réalisable dans les situations d'urgences ou les pays exotiques.

### SOLUTION TECHNIQUE

Un des buts de l'invention est donc de résoudre notamment les problèmes précités. L'invention se rapporte donc, selon un premier aspect à un dispositif de décontamination, notamment par décontaminant nucléaire, biologique et/ou chimique, d'un matériel, notamment un aéronef tel qu'un hélicoptère militaire selon la revendication 1.

Le dispositif comprend :
- une housse de protection adaptable à la forme du matériel, apte à former un tunnel décontamination étanche autour dudit matériel,
- au moins un module de décontamination, apte à éliminer la contamination du matériel disposé dans le tunnel formé par la housse de protection,
- un module de soufflage d'air chaud apte être disposé en entrée du tunnel formé par la housse de protection pour envoyer de l'air chaud dans ledit tunnel, et
- un module de filtration apte à être disposé en sortie du tunnel formé par la housse de protection pour détruire les vapeurs d'air contaminées et/ou récupérer le produit décontaminant en sortie dudit tunnel,
- le module de décontamination est un module d'aspiration apte à être disposé sous le, ou à l'extérieur du, tunnel formé par la housse de protection pour aspirer les particules contaminées sur le matériel; U
- le module de soufflage d'air chaud constitue le module, ou un des modules, de décontamination par mouvement d'air chaud à l'intérieur du tunnel formé par la housse de protection permettant de décoller des particules contaminées des parois ou de l'intérieur du matériel.

Suivant certains modes de réalisation, le dispositif comprend en outre une ou plusieurs des caractéristiques suivantes, prise(s) isolément ou suivant toutes les combinaisons techniquement possibles :
- le module de décontamination est un module d'injection de produit décontaminant, apte à être disposé sous le, ou à l'extérieur du, tunnel formé par la housse de protection, pour envoyer le produit décontaminant sur le matériel ;
- le module d'injection de produit décontaminant comprend un système de nébulisation par ultrasons ;
- le module de soufflage d'air est un module de surpression à air chaud apte à être disposé en entrée du tunnel formé par la housse de protection pour envoyer de l'air chaud dans ledit tunnel ;
- le module de surpression à air chaud présente un débit sensiblement compris entre 3000 et 8000 m3/h, de préférence sensiblement égal à 5000 m3/h, de manière préférée sensiblement égal à 6000 m3/h ;
- la housse de protection est une toile résistante aux produits toxiques nucléaires, radiologiques, biologiques, chimiques ;
- le module de filtration comprend un système de filtrage à charbon actif ;
- le dispositif comprend un ou plusieurs modules charpentes aptes à supporter la housse de protection ;
- le dispositif comprend un tapis de sol apte à coopérer de façon étanche avec la house de protection pour constituer le sol du tunnel formé par ladite housse de protection ;
- le dispositif comprend un ou plusieurs éléments de protection aptes à être disposés sur une ou plusieurs parties sensibles du matériel à décontaminer ;
- le dispositif comprend une ou plusieurs, de préférence trois, perches, destinées à être fixées par une de leurs extrémités respectives à la housse de protection pour permettre la mise en place de ladite housse de protection autour du matériel par tirage à partir du sol.

L'invention se rapporte également, selon un deuxième aspect à un procédé de décontamination d'un matériel, notamment par décontaminant nucléaire, biologique et/ou chimique, pour décontaminer notamment un aéronef tel qu'un hélicoptère militaire selon la revendication 5.

Le procédé comprend les étapes suivantes :
a. montage d'un tunnel de décontamination au moyen d'une housse de protection adaptable à la forme du matériel, disposée autour dudit matériel,
b. une ou plusieurs décontaminations du matériel au moyen d'un ou plusieurs modules de décontamination,
c. envoi d'air dans le tunnel formé par la housse de protection au moyen d'un module de soufflage d'air disposé en entrée dudit tunnel,
d. filtrage du produit décontaminant par un module de filtration disposé en sortie du tunnel formé par la housse de protection, pour détruire les vapeurs contaminées et/ou pour récupérer le produit décontaminant en sortie dudit tunnel;
   - le module de décontamination est un module d'aspiration, et l'étape de décontamination est une étape d'aspiration par le module d'aspiration disposé sous le, ou à l'extérieur du, tunnel formé par la housse de protection pour aspirer les particules contaminées sur le matériel;
   - le module de surpression à air chaud constitue le ou l'un des modules de décontamination, et l'étape d'envoi d'air chaud sous pression dans le tunnel formé par la housse de protection constitue l'étape ou l'une des étapes de décontamination par mouvement d'air chaud à l'intérieur dudit tunnel permettant de décoller des particules contaminées des parois ou de l'intérieur du matériel.

Suivant certains modes de mise en oeuvre, le procédé comprend en outre une ou plusieurs des caractéristiques suivantes, prise(s) isolément ou suivant toutes les combinaisons techniquement possibles :
- le module de décontamination est un module d'injection de produit décontaminant, et l'étape de décontamination est une décontamination par injection d'un produit décontaminant au moyen du module d'injection disposé sous le, ou à l'extérieur du, tunnel formé par la housse de protection pour envoyer le produit décontaminant sur le matériel ;
- la décontamination du matériel par injection du produit décontaminant comprend la nébulisation par ultrasons dudit produit décontaminant ;
- l'étape d'envoi d'air dans le tunnel formé par la housse de protection est une étape de d'envoi d'air chaud sous pression par un module de surpression à air chaud disposé en entrée dudit tunnel ;
- l'étape d'envoi d'air chaud sous pression dans le tunnel formé par la housse de protection comprend l'envoi d'air chaud selon un débit sensiblement compris entre 3000 et 8000 m3/h, de préférence sensiblement égal à 5000 m3/h, de manière préférée sensiblement égal à 6000 m3/h ;
- l'étape de filtrage du produit décontaminant utilise un module de filtration comprenant un système de filtrage à charbon actif ;
- l'étape de montage du tunnel de protection comprend l'utilisation d'un ou plusieurs modules charpentes pour supporter la housse de protection ;
- l'étape de montage du tunnel de protection comprend l'insertion du matériel sous la housse de protection supportée par le ou les modules charpentes, puis la mise en place de la housse de protection pour former une enveloppe étanche autour du matériel ;
- l'étape de montage du tunnel de protection comprend la mise en place d'un tapis de sol en coopération étanche avec la house de protection pour constituer le sol dudit tunnel ;
- le procédé comprend une étape de mise en place d'un ou plusieurs éléments de protection sur une ou plusieurs parties sensibles du matériel à décontaminer ;
- le procédé comprend l'utilisation d'une ou plusieurs, de préférence trois, perches, fixées par une de leurs extrémités respectives à la housse de protection pour permettre la mise en place de ladite housse de protection autour du matériel 1 par tirage à partir du sol.

### FIGURES

Les caractéristiques et avantages de l'invention apparaîtront à la lecture de la description qui va suivre, donnée uniquement à titre d'exemple, et non limitative, en référence aux figures annexées suivantes :
- figure 1 : exemple de dispositif selon l'invention, mis en place autour d'un hélicoptère militaire ;
- figure 2 : exemple de dispositif selon l'invention, en cours de mise en place autour d'un hélicoptère militaire.

### MODES DE REALISATION

Le dispositif de décontamination selon l'invention, destiné notamment au matériel militaire, notamment les aéronefs tels que des hélicoptères, a pour objet de traiter la contamination immédiatement après une mission dans une zone non contaminée. Le principe de fonctionnement consiste à accélérer l'évaporation du (ou des) toxique(s) présent(s) sur l'aéronef grâce à un flux d'air chaud à haut débit et un brumisateur susceptible de délivrer une solution mouillante et décontaminante chargée de favoriser l'évaporation des toxiques dits «permanents».

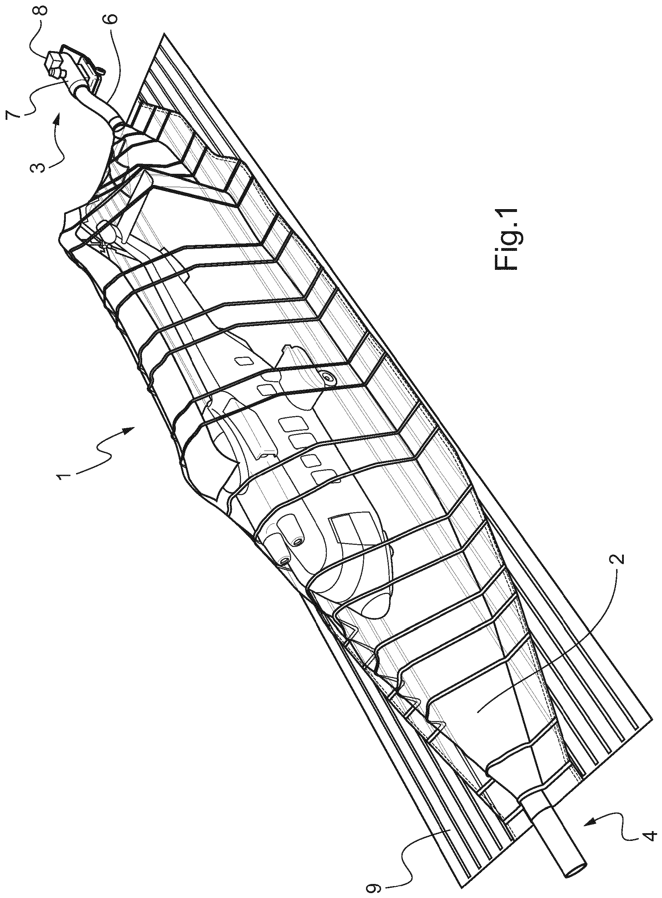

Tel que représenté sur la figure 1, une housse de protection 2 est disposée autour du matériel 1 à décontaminer, un hélicoptère militaire 1 dans cet exemple. Cette housse de protection 2 permet de canaliser le flux d'air autour du matériel 1 à décontaminer. En canalisant ce flux d'air autour du matériel 1, la housse de protection 2 permet également de contrôler la température maximale supportée par le matériel 1 grâce à une sonde thermique (non représentée sur la figure 1) disposée de manière appropriée sous la housse de protection 2, de contrôler la vitesse d'écoulement du flux d'air chaud et de recueillir des vapeurs toxiques, qui, selon leurs concentrations, peuvent être détruites par exemple par chloration ou tous types de décontamination, ou relâchées dans l'atmosphère, en fonction de la teneur en toxique mesurée en bout du tunnel formé par la housse de protection 2. Le tunnel, et notamment les dimensions de la housse de protection 2, est étudié pour couvrir différents types de matériel 1, en particulier différents types d'hélicoptères 1 dans toutes leurs différentes configurations.

Préférentiellement, le tunnel est étudié pour couvrir tout matériel 1 mono-rotor à pales repliables de longueur inférieure à 25 mètres et de hauteur inférieure à 10 mètres.

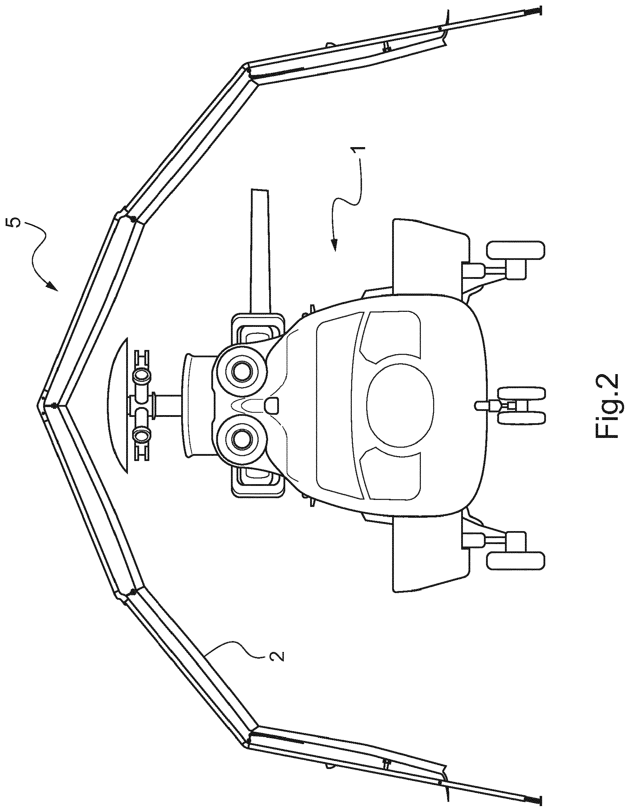

Le dispositif de décontamination comprend, de manière préférentielle sans être limitative, au moins un, de préférence deux, modules de charpentes 5 utilisés pour supporter la housse de protection 2 lors de la mise en place de cette housse de protection 2, tel que représenté sur la figure 2.

La housse de protection 2 est donc adaptable aux différents aéronefs 1.

On prévoit également un tapis de sol 9, adaptable, notamment par ses dimensions, aux différents aéronefs 1.

Un module de soufflage d'air 3, qui peut être un module de surpression à air chaud 3, est disposé en entrée du tunnel formé par la housse de protection 2 pour envoyer de l'air (éventuellement chaud sous pression) dans ce tunnel. Ce module 3 comprend un canon à air 6 associé à une pompe 7, alimentés en énergie par un groupe électrogène 8.

Un module de décontamination, qui est un module d'aspiration, est également prévu. Il est disposé à l'intérieur du tunnel formé par la housse de protection 2, ou à l'extérieur de ce tunnel, pour envoyer le produit décontaminant sur l'hélicoptère 1 (module d'injection) ou aspirer les particules contaminées de l'hélicoptère 1 (module d'aspiration).

La décontamination est obtenue simplement par l'envoi d'air chaud par le module de surpression à air chaud 3. Cette décontamination est plus précisément obtenue par mouvement de l'air chaud envoyé par le module de surpression à air chaud 3 à l'intérieur du tunnel formé par la housse de protection 2, ce qui permet de décoller des particules contaminées des parois ou de l'intérieur du matériel 1.

On peut également prévoir un ou plusieurs éléments de protection à disposer sur des parties sensibles de l'aéronef 1 pour protéger ces parties sensibles. Alternativement à l'utilisation des modules charpentes 5 mentionnés plus haut, on prévoit une ou plusieurs perches, de préférence trois perches, qui servent à mettre en place la housse de protection 2 autour de l'aéronef 1, manuellement et directement à partir du sol. En fixant de manière approprié les extrémités respectives de ces perches à la housse de protection 2 disposée au sol, on peut ensuite la tirer manuellement au moyen des perches depuis le sol, progressivement autour de l'aéronef 1, jusqu'à ce qu'elle enveloppe l'aéronef 1.

Le ou les modules charpentes 5 sont réalisés en aluminium ou en matière thermoplastique chargée entre 30 à 50% de fibres de verre ou de carbone ou d'un mélange de ceux-ci, recyclée ou non. Les profilés sont par exemple en alliage 6060 T5 (norme AFNOR - EN 573) ou en laquage RAL 6014 (Poudre d'époxy).Les mécanismes sont réalisés intégralement ou majoritairement en usinage dans la masse en AU 2017. On peut prévoir un traitement de surface pour une tenue en milieu salin, réalisé par anodisation (noir mat). L'ensemble des axes et de la visserie est, de préférence, en acier inoxydable.

Le groupe électrogène 8 est pourvu d'une interface de fixation sur l'ensemble canon à air chaud 6 plus pompe 7. Ses principales caractéristiques sont préférentiellement celles listées dans le tableau 1.

**Tableau 1**

| | |
|---|---|
| Fréquence (Hz) | 50 |
| Tension (v) | 230 |
| Puissance continue | 5kva |
| Puissance maxi | 6kva |
| Courant continu | 12 v- 8,3A |
| Moteur | AT186FE |
| Type | Monocylindre 4 Temps |
| Cylindrée | 406 cm3 |
| Démarrage | Manuel et Electrique + Préchauffage |
| Vitesse moteur (tr/min) | 3.000 |
| Puissance moteur maxi | 10 cv |
| Course × alésage | 86mm × 70mm |
| Réservoir huile | 1.65L |
| Niveau sonore db à 7m | 80db |

Le canon à air chaud 6 peut par exemple être constitué d'un système standard, modifié pour améliorer le débit de soufflage malgré la pression continue en sortie du canon. Ses caractéristiques sont préférentiellement celles listées dans le tableau 2.

**Tableau 2**

| | |
|---|---|
| brûleur (kW) | 80,6 |
| rendement | 91% |
| Débit d'air (m3/h) | 6000 |
| Conso fuel (litres/heure) | 6,8 |
| Conso elec 230 V mono | 4 A |
| Niveau sonore 1m | 74,3 dB(A) |
| Diamètre Cheminée | 180 mm |
| Diamètre sortie d'air (mm) | 400 et 2x300 |

Le canon à air chaud 6 peut faire partie d'un ensemble comprenant un système diesel autonome sur châssis comprenant lui-même la ventilation et le chauffage d'une part et le groupe électrogène 8 d'autre part. De préférence, le groupe électrogène 8 est facilement déconnectable et par conséquent l'ensemble se transporte facilement en deux fardeaux.

La housse de protection 2 est réalisée dans une toile résistante aux toxiques NRBC (Nucléaires, Radiologiques, Biologiques, Chimiques). Elle est divisée préférentiellement en autant de parties, ce qui la rend réglable et adaptable, afin de couvrir les différentes dimensions du matériel 1 à décontaminer. Ses caractéristiques sont préférentiellement celles listées dans le tableau 3.

**Tableau 3**

| | | | |
|---|---|---|---|
| Poids | gr/m² | | 265 +/- 15% |
| Epaisseur | microns | | 225 +/- 15% |
| Résistance à l'étirement (ASTM D 882-97) | N/15 | longitudinale | 105 +/- 15% |
| | | transversal | 99 +/- 15% |
| Elongation | % | longitudinale | > 300 |
| | | transversale | > 350 |
| Résistance au déchirement (tension continue) | N/15 | longitudinale | 30 +/- 15% |
| | | transversale | 30 +/- 15% |
| Résistance au gaz moutarde | supérieure à 24 heures | | |
| Soudure | haute fréquence | | |
| Aspect visuel | - translucide, sans particules, bulles, plis ou fissures | | |
| | - différentes couleurs | | |
| Autres caractéristiques | - niveau de bruit très bas | | |
| | > faible épaisseur | | |

Le tapis de sol 9 est divisé en autant de parties, ce qui le rend réglable et adaptable afin de s'ajuster aux différentes dimensions du matériel 1 à décontaminer. Il peut être installé sur tout type de sol. Il est réalisé dans une toile dont les caractéristiques sont préférentiellement celles listées dans le tableau 4.

**Tableau 4**

| | | | |
|---|---|---|---|
| Tissu | | 100% PES | |
| | | 1100 dtex | |
| Poids | | 700 g/m2 abuv | NF G 37102 |
| | | | DIN 53352 |
| | | | ISO2286 |
| Laquage | | 0/0 | |
| Résistance rupture | Chaine | 2000 N/5cm | EN ISO 1421 |
| | trame | 2000 N/5cm | DIN 53354 |
| | | | ISO 1421 |
| Résistance à la déchirure | chaine | 170 N | DIN 53363 |
| | trame | 250 N | NF G 37130 |
| Adhérence | | 100 N/5cm | EN ISO 2411 |
| | | | DIN 53530 |
| | | | ISO 2412 |
| Tenue à la température | | -30°C/+70°C | DIN EN 1876-2 1988 |
| Tenue à la lumière | (excepté en blanc et (semi-) transparent | 6-8 | NFG 07-012-2 |
| Inflammabilité | | M2 | NFP 92 507 |
| Application | Tapis anti-glisse | | |

Un exemple de montage du dispositif est donné ci-après, dans le cas de la décontamination d'un hélicoptère.

La première étape consiste dans le montage du tunnel de décontamination. Le déploiement et le positionnement de la structure porteuse comprenant le ou les modules charpentes 5, se fait à l'horizontale. La toile formant la housse de protection 2 est ensuite déployée et accrochée sous la charpente formée des différents modules charpentes 5. Une fois la charpente 5 et la housse de protection 2 installées, on place le canon à air chaud 6 du module de surpression à air chaud 3 à l'arrière, ou à l'entrée, de la housse de protection 2. Parallèlement, on peut positionner les éléments de protection sur les parties sensible de l'hélicoptère 1. Une fois la housse de protection 2 installée sur la charpente 5 et les éléments de protection positionnés sur l'hélicoptère 1, la mise en place de la housse de protection 2 autour de l'hélicoptère 1 peut débuter. On positionne l'aéronef 1 munit des éléments de protection sur le tapis de sol 9, puis on recule l'aéronef 1 sous l'ensemble charpente 5 plus housse de protection 2, jusqu'à ce qu'il touche le fond de cette housse de protection 2. La housse de protection 2 est alors déployée sur et autour de l'aéronef 1.

Une fois la housse de protection 2 mise en place, on peut mettre en marche le module de surpression à air chaud 3.

La mise en route du module de surpression à air chaud 3 peut se faire avant la mise en route du module d'injection de produit décontaminant, tel qu'un brumisateur, ou en même temps.

Après la mise en route du module d'injection de produit décontaminant, on peut mettre en place un appareil de contrôle en sortie du tunnel, pour mesurer la teneur en toxiques en sortie.

Une fois la décontamination terminée, on peut retirer la housse de protection 2 de l'aéronef 1. Si la décontamination est complète (aéronef 1 et housse de protection 2 du tunnel), on étale la toile formant la housse de protection 2 sur le sol puis on roule la toile pour pouvoir l'introduire dans son sac. Ensuite, on replie et démonte la charpente 5.

Seule la partie intérieure de la housse de protection 2 est susceptible de subir une contamination par transfert, lors du contact avec la carlingue de l'aéronef 1. Cette contamination doit s'éliminer par évaporation lors du traitement de l'aéronef 1.

Dans le cas contraire, en cas de doute, ou avant le démontage et le reconditionnement pour stockage, le tunnel est refermé après retrait de l'aéronef 1, puis subit une brumisation au moyen du module d'injection du produit décontaminant, suivie d'une évaporation.

Le tapis de sol 9 fait l'objet d'un contrôle particulier sur un sol détrempé, et éventuellement d'une décontamination particulière. La destruction des vapeurs contaminées en sortie de tunnel, peut se faire par branchement du module d'injection de produit décontaminant en sortie de tunnel.

De manière préférentielle, le produit décontaminant est une solution de décontamination comportant au minimum 15% d'hypochlorite de soude.

Le choix des solutions de mouillage et de décontamination peut se faire dans la liste suivante, à titre d'exemple : produit « GD-6 » de la société OWR ; le produit « TECcare Ultra » ; les produits « BX 24 », « BX 30 », « BX 40 », « BX 60/2 » et « BX 65 » de la société Cristanini ; les produits « RDS 2000 », « GDS 2000 » et « RM 21 » de la société Karcher.

Afin d'effectuer une décontamination biologique, on utilise une solution de décontamination appropriée avec un système de brumisation placé à l'intérieur du tunnel fermé.

L'objectif est de créer et maintenir une atmosphère remplie de produit de décontamination, pour minimiser le temps de contact avec l'agent contaminant.

A la fin du processus de décontamination, l'utilisateur peut prélever des échantillons sur différentes parties de l'hélicoptère 1 et réaliser des tests rapides ou envoyer ces échantillons à un laboratoire pour réaliser ces tests. Un test rapide sur place ne prend que quelques minutes, et ne compromet donc pas une opération tactique en cours avec l'aéronef 1. De tels tests permettent de s'assurer que la décontamination a été correctement réalisée.

Le procédé de l'invention ne nécessite qu'une seule personne pour la mise en place du module d'injection à l'intérieur du tunnel. Ensuite, le dispositif de l'invention fonctionne sans l'aide d'une personne à l'intérieur du tunnel. Le dispositif de l'invention est facile à utiliser.

Le dispositif de l'invention permet d'obtenir un volume de décontamination pouvant aller jusqu'à 600 m3. Les temps de traitement s'étalent de 36 minutes pour un volume de l'ordre de 150 m3 à 68 minutes pour un volume de l'ordre de 600 m3..

D'autres avantages du dispositif et du procédé de l'invention sont :
- décontamination environnementale totale visant les voies de transmission de d'infection ;
- possibilité de déploiement pour contrôler les foyers de contamination, ou utilisation préventive pour réduire le risque de transmission d'agents pathogènes hautement infectieux ;
- adaptés à l'utilisation dans différents systèmes de soin de santé, avec une période de formation minimale ;
- conception robuste pour satisfaire aux exigences des environnements de soins primaires et aigus, permettant une décontamination efficace et rapide ;
- utilisation d'une technologie biocide à action rapide et à large spectre, avec des avantages clés en termes de sécurité et d'efficacité, par rapport à d'autres technologies par vaporisation et par aérosol.

Pour la décontamination chimique, on utilise un module d'injection qui ne nécessite que quelques minutes pour remplir l'atmosphère de décontaminant. Il est nécessaire de s'assurer que le produit décontaminant atteint bien toutes les parties de l'aéronef 1, et reste en contact avec le contaminant au moins 15 minutes. Dans ce but, il est préférable de maintenir le tunnel fermé.

Après 15 minutes, le tunnel peut être ouvert et des tests de contrôle peuvent être réalisés, afin de s'assurer qu'aucun agent chimique ne subsiste à l'intérieur du tunnel ainsi qu'à l'intérieur de l'aéronef. Cette procédure peut être mise en oeuvre avec un détecteur chimique, avec précaution afin d'atteindre toutes les parties critiques de l'aéronef 1.

Pour les surfaces sensibles, tel que l'intérieur de l'aéronef 1, on peut utiliser un agent de décontamination en solution non aqueuse, appliqué par fines couches.

L'extérieur de l'aéronef 1 peut être décontaminé en utilisant un module d'injection à faible pression pour protéger des parties sensibles de l'aéronef 1, telles que les dispositifs de vision et d'imagerie thermique.

Concernant la contamination radiologique, difficile à contrôler, l'objectif est de supprimer la poussière radioactive de la surface de l'aéronef 1. Dans ce but, on peut utiliser un aspirateur pour absorber la poudre. Un tel aspirateur peut être utilisé sur des surfaces très sensibles, tel que le tableau de bord électrique de l'aéronef 1. Cette procédure peut être mise en oeuvre simultanément à une procédure de contrôle. Ce contrôle peut aussi être mis en oeuvre avant l'utilisation de l'aspirateur, afin de déterminer d'où viennent les sources de radiation et se concentrer alors sur les parties correspondantes de l'aéronef 1.

A la fin de toutes les décontamination (biologiques, chimiques et radiologiques), l'aspirateur peut être utilisé pour nettoyer le tunnel. Un tel dispositif d'extraction doit permettre de récupérer les liquides et les solides de différentes sources NRBC.

Toutes les personnes impliquées dans l'utilisation du dispositif de l'invention, et dans la mise en oeuvre du procédé de l'invention, doivent porter un vêtement de protection, des gants, des sur-bottes, etc....

La présente description est donnée à titre d'exemple non limitatif de l'invention. En particulier, l'invention ne se limite pas à la décontamination d'un hélicoptère, ni même d'un autre type d'aéronef, mais s'étend à la décontamination de tout type de véhicule et matériel, notamment militaire, tels que des chars, des camions, des missiles transportés dans un véhicule ou matériel militaire.

## Revendications

1. Dispositif de décontamination d'un matériel (1), pour décontaminer notamment un aéronef tel qu'un hélicoptère militaire (1), le dispositif comprenant
- une housse de protection (2) adaptable à la forme du matériel (1), apte à former un tunnel décontamination étanche autour dudit matériel (1),
- au moins un module de décontamination, apte à éliminer la contamination du matériel (1) disposé dans le tunnel formé par la housse de protection (2),
- un module de soufflage d'air chaud (3) apte être disposé en entrée du tunnel formé par la housse de protection (2) pour envoyer de l'air chaud dans ledit tunnel, et
- un module de filtration (4) apte à être disposé en sortie du tunnel formé par la housse de protection (2) pour détruire les vapeurs d'air contaminées et/ou récupérer le produit décontaminant en sortie dudit tunnel, **caractérisé en ce que** le module de décontamination est un module d'aspiration, apte à être disposé sous le, ou à l'extérieur du, tunnel formé par la housse de protection (2) pour aspirer les particules contaminées sur le matériel (1) et **caractérisé en ce que** le module de soufflage d'air chaud (3) constitue le module, ou un des modules, de décontamination par mouvement d'air chaud à l'intérieur du tunnel formé par la housse de protection (2) permettant de décoller des particules contaminées des parois ou de l'intérieur du matériel (1).

2. Dispositif selon la revendication 1, **caractérisé en ce que** le module de soufflage d'air (3) est un module de surpression à air chaud (3) apte à être disposé en entrée du tunnel formé par la housse de protection (2) pour envoyer de l'air chaud dans ledit tunnel.

3. Dispositif selon l'une quelconque des revendications 1 à 2, **caractérisé en ce qu'**il comprend un ou plusieurs modules charpentes (5) aptes à supporter la housse de protection (2).

4. Dispositif selon l'une quelconque des revendications 1 à 3, **caractérisé en ce qu'**il comprend en outre un tapis de sol (9) apte à coopérer de façon étanche avec la house de protection (2) pour constituer le sol du tunnel formé par ladite housse de protection (2).

5. Procédé de décontamination d'un matériel (1), notamment un aéronef tel qu'un hélicoptère militaire (1), comprenant les étapes suivantes :
a. montage d'un tunnel de décontamination au moyen d'une housse de protection (2) adaptable à la forme du matériel (1), disposée autour dudit matériel (1),
b. une ou plusieurs décontaminations du matériel (1) au moyen d'un ou plusieurs modules de décontamination,
c. envoi d'air chaud dans le tunnel formé par la housse de protection (2) au moyen d'un module de surpression à air chaud (3) disposé en entrée dudit tunnel,
d. filtrage du produit décontaminant par un module de filtration (4) disposé en sortie du tunnel formé par la housse de protection (2), pour détruire les vapeurs contaminées et/ou pour récupérer le produit décontaminant en sortie dudit tunnel, **caractérisé en ce que** le module de décontamination est un module d'aspiration, et **en ce que** l'étape de décontamination est une étape d'aspiration par le module d'aspiration disposé sous le, ou à l'extérieur du, tunnel formé par la housse de protection (2) pour aspirer les particules contaminées sur le matériel (1) et **caractérisé en ce que** le module de surpression à air chaud (3) constitue le ou l'un des modules de décontamination, et **en ce que** l'étape d'envoi d'air chaud sous pression dans le tunnel formé par la housse de protection (2) constitue l'étape ou l'une des étapes de décontamination par mouvement d'air chaud à l'intérieur dudit tunnel permettant de décoller des particules contaminées des parois ou de l'intérieur du matériel (1).

6. Procédé selon la revendication 5, **caractérisé en ce que** l'étape d'envoi d'air dans le tunnel formé par la housse de protection (2) est une étape d'envoi d'air chaud sous pression par un module de surpression à air chaud (3) disposé en entrée dudit tunnel.

7. Procédé selon l'une quelconque des revendications 5 à 6, **caractérisé en ce que** l'étape de montage du tunnel de protection comprend l'utilisation d'un ou plusieurs modules charpentes (5) pour supporter la housse de protection (2).

8. Procédé selon la revendication 7, **caractérisé en ce que** l'étape de montage du tunnel de protection comprend l'insertion du matériel (1) sous la housse de protection (2) supportée par le ou les modules charpentes (5), puis la mise en place de la housse de protection (2) pour former une enveloppe étanche autour du matériel (1).

9. Procédé selon l'une quelconque des revendications 5 à 8, **caractérisé en ce que** l'étape de montage du tunnel de protection comprend la mise en place d'un tapis de sol (9) en coopération étanche avec la housse de protection (2) pour constituer le sol dudit tunnel.

## Patentansprüche

1. Vorrichtung zum Dekontaminieren einer Ausrüstung (1), um insbesondere ein Luftfahrzeug, wie etwa einen Militärhubschrauber, (1) zu dekontaminieren, wobei die Vorrichtung umfasst
- eine Schutzhülle (2), die an die Form der Ausrüstung (1) angepasst werden kann und geeignet ist, einen dichten Dekontaminationstunnel um die Ausrüstung (1) herum zu bilden,
- mindestens ein Dekontaminationsmodul, das geeignet ist, die Kontamination der Ausrüstung (1), die in dem von der Schutzhülle (2) gebildeten Tunnel angeordnet ist, zu beseitigen,
- ein Heißluftgebläsemodul (3), das geeignet ist, am Eingang des von der Schutzhülle (2) gebildeten Tunnels angeordnet zu werden, um heiße Luft in den Tunnel einzublasen, und
- ein Filtermodul (4), das geeignet ist, am Ausgang des von der Schutzhülle (2) gebildeten Tunnels angeordnet zu werden, um die kontaminierten Luftdämpfe zu vernichten und/oder das Dekontaminationsmittelprodukt am Ausgang des Tunnels zurückzugewinnen, **dadurch gekennzeichnet, dass** das Dekontaminationsmodul ein Absaugmodul ist, das geeignet ist, unter dem, oder außerhalb des, von der Schutzhülle (2) gebildeten Tunnels angeordnet zu werden, um die kontaminierten Partikel auf der Ausrüstung (1) abzusaugen, und **dadurch gekennzeichnet, dass** das Heißluftgebläsemodul (3) das Modul, oder eines der Module, zum Dekontaminieren durch Bewegung von heißer Luft im Inneren des von der Schutzhülle (2) gebildeten Tunnels bildet, das es ermöglicht, kontaminierte Partikel von den Wänden oder aus dem Inneren der Ausrüstung (1) zu lösen.

2. Vorrichtung nach Anspruch 1, **dadurch gekennzeichnet, dass** das Luftgebläsemodul (3) ein Heißluft-Überdruckmodul (3) ist, das geeignet ist, am Eingang des von der Schutzhülle (2) gebildeten Tunnels angeordnet zu werden, um heiße Luft in den Tunnel einzublasen.

3. Vorrichtung nach einem der Ansprüche 1 bis 1, **dadurch gekennzeichnet, dass** sie ein oder mehrere Gerüstmodule (5) umfasst, die geeignet sind, die Schutzhülle (2) zu tragen.

4. Vorrichtung nach einem der Ansprüche 1 bis 3, **dadurch gekennzeichnet, dass** sie weiter eine Bodenmatte (9) umfasst, die geeignet ist, dicht mit der Schutzhülle (2) zusammenzuwirken, um den Boden des von der Schutzhülle (2) gebildeten Tunnels zu bilden.

5. Verfahren zum Dekontaminieren einer Ausrüstung (1), insbesondere eines Luftfahrzeugs wie etwa eines Militärhubschraubers (1), das die folgenden Schritte umfasst:
a. Montieren eines Dekontaminationstunnels mittels einer Schutzhülle (2), die an die Form der Ausrüstung (1) angepasst werden kann und um die Ausrüstung (1) herum angeordnet ist,
b. eine oder mehrere Dekontaminationen der Ausrüstung (1) mittels eines oder mehrerer Dekontaminationsmodule,
c. Einblasen von heißer Luft in den von der Schutzhülle (2) gebildeten Tunnel mittels eines am Eingang des Tunnels angeordneten Heißluft-Überdruckmoduls (3),
d. Filtern des Dekontaminationsmittelprodukts durch ein Filtermodul (4), das am Ausgang des von der Schutzhülle (2) gebildeten Tunnels angeordnet ist, um die kontaminierten Dämpfe zu vernichten und/oder das Dekontaminationsmittelprodukt am Ausgang des Tunnels zurückzugewinnen, **dadurch gekennzeichnet, dass** das Dekontaminationsmodul ein Absaugmodul ist, und dadurch, dass der Schritt des Dekontaminierens ein Schritt des Absaugens durch das unter dem, oder außerhalb des, von der Schutzhülle (2) gebildeten Tunnels angeordnete Absaugmodul ist, um die kontaminierten Partikel auf der Ausrüstung (1) abzusaugen, und **dadurch gekennzeichnet, dass** das Heißluft-Überdruckmodul (3) das oder eines der Dekontaminationsmodule bildet, und dadurch, dass der Schritt des Einblasens von heißer Luft unter Druck in den von der Schutzhülle (2) gebildeten Tunnel den Schritt oder einen der Schritte zum Dekontaminieren durch Bewegung von heißer Luft im Inneren des Tunnels bildet, der es ermöglicht, kontaminierte Partikel von den Wänden oder aus dem Inneren der Ausrüstung (1) zu lösen.

6. Verfahren nach Anspruch 5, **dadurch gekennzeichnet, dass** der Schritt des Einblasens von Luft in den von der Schutzhülle (2) gebildeten Tunnel ein Schritt des Einblasens von heißer Luft unter Druck durch ein Heißluft-Überdruckmodul (3) ist, das am Eingang des Tunnels angeordnet ist.

7. Verfahren nach einem der Ansprüche 5 bis 6, **dadurch gekennzeichnet, dass** der Schritt des Montierens des Schutztunnels das Verwenden eines oder mehrerer Gerüstmodule (5) umfasst, um die Schutzhülle (2) zu tragen.

8. Verfahren nach Anspruch 7, **dadurch gekennzeichnet, dass** der Schritt des Montierens des Schutztunnels das Einbringen der Ausrüstung (1) unter die von dem oder den Gerüstmodulen (5) getragene Schutzhülle (2), und anschließend das Anbringen der Schutzhülle (2) umfasst, um eine dichte Hülle um die Ausrüstung (1) herum zu bilden.

9. Verfahren nach einem der Ansprüche 5 bis 8, **dadurch gekennzeichnet, dass** der Schritt des Montierens des Schutztunnels das Anbringen einer Bodenmatte (9) in dichtem Zusammenwirken mit der Schutzhülle (2) umfasst, um den Boden des Tunnels zu bilden.

## Claims

1. Device for the decontamination of a material (1), for decontaminating, in particular, an aircraft such as a military helicopter (1), the device comprising
- a protective cover (2) that can be adapted to the shape of the material (1), able to form a fluidtight decontamination tunnel around said material (1),
- at least one decontamination module, able to eliminate the contamination from the material (1) arranged inside the tunnel formed by the protective cover (2),
- a hot air-blowing module (3) able to be arranged at the entrance to the tunnel formed by the protective cover (2) in order to dispatch hot air into said tunnel, and
- a filtration module (4) able to be positioned at the exit from the tunnel formed by the protective cover (2) in order to destroy contaminated air vapors and/or to recover the decontaminant at the exit from said tunnel, **characterized in that** the decontamination module is a suctioning module, able to be positioned under, or at the outside of, the tunnel formed by the protective cover (2) to suction the contaminated particles on the material (1), and **characterized in that** the hot air-blowing module (3) constitutes the decontamination module, or one of the decontamination modules, by moving hot air inside the tunnel formed by the protective cover (2) making it possible to remove the contaminated particles from the walls or from the inside of the material (1).

2. - Device according to claim 1, **characterized in that** the air-blowing module (3) is a hot air positive pressure module (3) able to be arranged at the entrance to the tunnel formed by the protective cover (2) in order to dispatch hot air into said tunnel.

3. Device according to any one of claims 1 to 2, **characterized in that** it comprises one or more framing modules (5) able to support the protective cover (2).

4. Device according to any one of claims 1 to 3, **characterized in that** it further comprises a groundsheet (9) able to sealingly engage with the protective cover (2) to constitute the floor of the tunnel formed by said protective cover (2).

5. Method for the decontamination of a material (1), in particular, an aircraft such as a military helicopter (1), comprising the following steps:
a. mounting of a decontimination tunnel by means of a protective cover (2) that can be adapted to the shape of the material (1), positioned around said material (1),
b. one or more decontiminations of the material (1) by means of one or more decontamination modules,
c. dispatching of hot air into the tunnel formed by the protective cover (2) by means of a hot air positive pressure module (3) positioned at the entrance of said tunnel,
d. filtering of the decontaminant by a filtration module (4) positioned at the exit from the tunnel formed by the protective cover (2) in order to destroy contaminated air vapors and/or to recover the decontaminant at the exit from said tunnel, **characterized in that** the decontamination module is a suctioning module, and **in that** the decontamination step if a step of suctioning the contaminated particles on the material (1), and **characterized in that** the hot air positive pressure module (3) constitutes the or one of the decontamination modules, and **in that** the step of dispatching pressurized hot air into the tunnel formed by the protective cover (2) constitutes the decontamination step or one of the decontamination steps by moving hot air inside said tunnel, making it possible to remove the contaminated particles from the walls or from the inside of the material (1).

6. - Method according to claim 5, **characterized in that** the step of dispatching air into the tunnel formed by the protective cover (2), is a step of dispatching pressurized hot air by a hot air positive pressure module (3) positioned at the entrance of said tunnel.

7. Method according to any one of claims 5 to 6, **characterized in that** the step of mounting the protective tunnel comprises the use of one or more framing modules (5) in order to support the protective cover (2).

8. Method according to claim 7, **characterized in that** the step of mounting the protective tunnel comprises the insertion of the material (1) under the protective cover (2) supported by the framing module(s) (5), then the implementation of the protective cover (2) to form a fluidtight envelope around the material (1).

9. Method according to any one of claims 5 to 8, **characterized in that** the step of mounting the protective tunnel comprises the implementation of a groundsheet (9) in fluidtight engagement with the protective cover (2) to constitute the floor of said tunnel.
